# EUROPEAN PATENT APPLICATION

(11) **EP 4 683 096 A1**
(43) Date of publication of application: **21.01.2026**
(21) Application number: 24860268.2
(22) Date of filing: 13.08.2024
(51) Int. Cl.: H01M 50/531, B21D 22/04, H01M 10/052

(54) **ELECTRODE LEAD, MANUFACTURING METHOD THEREFOR, AND LITHIUM SECONDARY BATTERY COMPRISING SAME**

(30) Priority: 30.08.2023 KR 20230114977
(71) Applicant: LG Energy Solution, Ltd., Seoul 07335 (KR)
(72) Inventor: YOON, Hye Jung, Daejeon 34122 (KR); YU, Hyung Kyun, Daejeon 34122 (KR); HWANG, Soo Ji, Daejeon 34122 (KR); KIM, Jin Hyung, Daejeon 34122 (KR); KIM, Mi Na, Daejeon 34122 (KR)
(74) Representative: Goddar, Heinz J.
(86) International application number: PCT/KR2024/012082
(87) International publication number: WO 2025/048347

(57) **Abstract**

The present invention relates to an electrode lead electrically connected to an electrode assembly, the electrode lead including a metal terminal; and a film layer which is disposed on the metal terminal and has two or more patterns engraved on a surface of the film layer, wherein the two or more patterns are arranged apart from each other at equal intervals in a direction parallel to the film layer, and each of the patterns includes a side surface and a bottom surface.

## Description

### TECHNICAL FIELD

### Cross-reference to Related Applications

This application claims priority from Korean Patent Application No. 10-2023-0114977, filed on August 30, 2023, the disclosure of which is incorporated by reference herein.

### Technical Field

The present invention relates to an electrode lead, a method of preparing the same, and a lithium secondary battery including the same, and more particularly, to an electrode lead in which heat generation amount and resistance between the electrode lead and a jig are reduced, a method of preparing the same, and a lithium secondary battery including the same.

### BACKGROUND ART

Demand for secondary batteries has also been rapidly increased as technology development and demand with respect to mobile devices have increased. Among these secondary batteries, lithium secondary batteries are widely used as an energy source for various electronic products as well as various mobile devices due to their high energy density, high operating voltage, and excellent preservation and life characteristics.

A lithium secondary battery is generally composed of an electrode assembly including a positive electrode, a negative electrode, and a separator, a battery case accommodating the electrode assembly, an electrolyte injected into the battery case, and an electrode lead electrically connecting the lithium secondary battery to an external device or electrically connecting the secondary batteries to each other.

In this case, a lead film is attached to an interface between the electrode lead and the battery case to prevent a short circuit between the electrode lead and the battery case and seal the electrode lead and the battery case. The lead film is generally formed of a polymer for insulation and fusion with the battery case, and, accordingly, there is a problem in that sealing strength at an interface with the electrode lead formed of metal is reduced. As a result, since the lead film was peeled off from a surface of the electrode lead, an electrolyte solution leaks at the interface between the lead film and the electrode lead or moisture penetrates from the outside to cause stability problems.

In order to solve the above problems, there is an attempt to improve electrolyte solution resistance and the sealing strength between the electrode lead and the lead film by performing a surface treatment, such as oxide film formation, on the surface of the electrode lead. However, in a case in which a film layer is formed on the surface of the electrode lead through the surface treatment, resistance of the surface of the electrode lead is increased when charge and discharge are performed while pressing the lead with a jig due to a thickness of the film layer formed, and, accordingly, since an amount of heat generated from the electrode lead is increased, there is a problem in that life characteristics and stability of the lithium secondary battery are degraded.

### DISCLOSURE OF THE INVENTION

### TECHNICAL PROBLEM

An aspect of the present invention provides an electrode lead, which may improve sealing strength between a lead film and the electrode lead while simultaneously reducing amount of heat and resistance which are generated in the electrode lead during charge and discharge, a method of preparing the same, and a lithium secondary battery including the same.

### TECHNICAL SOLUTION

[1] The present invention provides an electrode lead electrically connected to an electrode assembly, the electrode lead including a metal terminal; and a film layer which is disposed on the metal terminal and has two or more patterns engraved on a surface of the film layer, wherein the two or more patterns are arranged apart from each other at equal intervals in a direction parallel to the film layer, and each of the patterns includes a side surface and a bottom surface.
[2] The present invention provides the electrode lead of [1] above, wherein a shape of the bottom surface of the pattern is polygonal, circular, or elliptical.
[3] The present invention provides the electrode lead of [1] or [2] above, wherein each of the patterns has an identical depth.
[4] The present invention provides the electrode lead of at least one of [1] to [3] above, wherein each of the patterns has an identical bottom surface area.
[5] The present invention provides the electrode lead of at least one of [1] to [4] above, wherein the bottom surface and the side surface of the pattern are perpendicular to each other.
[6] The present invention provides the electrode lead of at least one of [1] to [5] above, wherein a ratio of bottom surface areas of the total patterns to a cross-sectional area of the film layer is in a range of 0.05 to 0.7, preferably 0.06 to 0.6, and more preferably 0.07 to 0.5.
[7] The present invention provides the electrode lead of at least one of [1] to [6] above, wherein a ratio of a bottom surface area of the single pattern to a cross-sectional area of the film layer is in a range of 0.005 to 0.010, preferably 0.0058 to 0.009, and more preferably 0.006 to 0.008.
[8] The present invention provides the electrode lead of at least one of [1] to [7] above, wherein a ratio of a depth of the pattern to a thickness of the film layer is in a range of 0.3 to 0.7, preferably 0.4 to 0.65, more preferably 0.45 to 0.6, and even more preferably 0.45 to 0.55.
[9] The present invention provides the electrode lead of at least one of [1] to [8] above, wherein the film layer may include at least one selected from the group consisting of chromate, zirconium salt, titanium salt, and phosphate, and may preferably include chromate.
[10] The present invention provides the electrode lead of at least one of [1] to [9] above, wherein the metal terminal includes at least one selected from the group consisting of aluminum, copper, nickel, and nickel-plated copper, specifically aluminum, nickel, or a combination thereof, and more specifically aluminum.
[11] The present invention provides the electrode lead of at least one of [1] to [10] above, wherein a ratio of a thickness of the metal terminal to a thickness of the film layer is in a range of 10,000:1 to 500:1, preferably 6,000:1 to 500:1, and more preferably 5,000:1 to 500:1.
[12] The present invention provides a lithium secondary battery which includes an electrode assembly including a positive electrode, a negative electrode, and a separator; a battery case accommodating the electrode assembly; an electrolyte; an electrode tab connected to each of the positive electrode and the negative electrode and protruding from one side of the assembly; the above-described electrode lead having one end connected to the electrode tab; and a lead film disposed at an interface between the electrode lead and the battery case.
[13] The present invention provides a method of preparing an electrode lead which includes forming a film layer on a metal terminal by a gravure coating device, wherein the gravure coating device includes a rolling roll and a gravure roll, wherein the gravure roll has surface roughness, and two or more patterns are engraved on a surface of the film layer, wherein the two or more patterns are arranged apart from each other at equal intervals in a direction parallel to the film layer, and each of the patterns includes a side surface and a bottom surface.
[14] The present invention provides the method of [13] above, wherein the film layer may include at least one selected from the group consisting of chromate, zirconium salt, titanium salt, and phosphate, and may preferably include chromate.
[15] The present invention provides the method of [13] or [14] above, wherein each of the patterns has an identical depth, and each of the patterns has an identical bottom surface area.

### ADVANTAGEOUS EFFECTS

According to the present invention, since engraved patterns are uniformly formed on a film layer which is disposed on a surface of a metal terminal of an electrode lead, an amount of heat and contact resistance, which are generated from the electrode lead when charge and discharge are performed while pressing the electrode lead with a jig, may be reduced while electrolyte solution resistance and sealing strength between the electrode lead and a lead film are improved. Accordingly, output characteristics, life characteristics, and stability of a lithium secondary battery may be improved.

### BRIEF DESCRIPTION OF THE DRAWINGS

FIG. 1 is a cross-sectional view illustrating a schematic structure of an electrode lead according to an embodiment of the present invention.
FIG. 2 is a perspective view illustrating the schematic structure of the electrode lead according to the embodiment of the present invention.
FIG. 3 is a schematic cross-sectional view of an electrode lead including a film layer in which two or more patterns are arranged apart from each other at unequal intervals in a direction parallel to the film layer.
FIG. 4 is a schematic process diagram of a gravure coating device for preparing the electrode lead according to the embodiment of the present invention.
FIG. 5 is an exploded assembly view of a lithium secondary battery according to the present invention.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

Hereinafter, the present invention will be described in detail.

A precursor for a positive electrode active material according to the present invention, a method of preparing the same, a positive active material, a positive electrode and/or a lithium secondary battery include at least one of configurations disclosed below, and may include any combination between technically possible configurations among the configurations below.

### Electrode Lead

An electrode lead according to the present invention is an electrode lead electrically connected to an electrode assembly, wherein the electrode lead includes a metal terminal; and a film layer which is disposed on the metal terminal and has two or more patterns engraved on a surface of the film layer, wherein the two or more patterns are arranged apart from each other at equal intervals in a direction parallel to the film layer, and each of the patterns includes a side surface and a bottom surface.

The electrode leads are connected to electrode tabs which extend from positive electrode and negative electrode plates included in the electrode assembly and protrude, and may function as electrode terminals which electrically connect a secondary battery and an external device of the secondary battery, or electrically connect secondary batteries to each other.

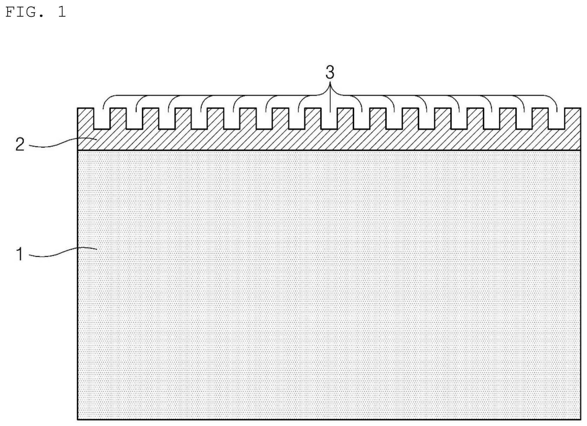

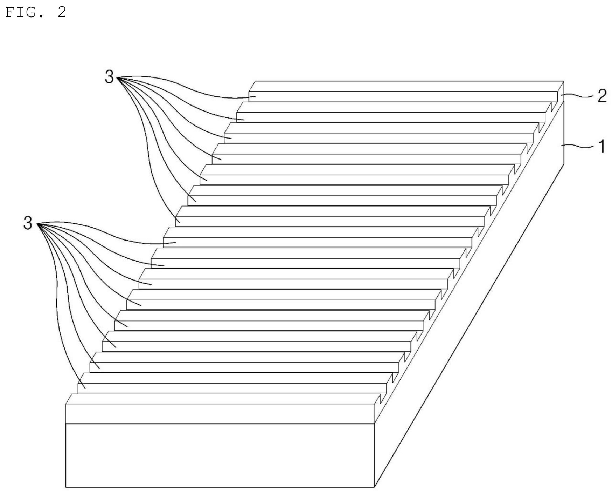

FIG. 1 is a cross-sectional view illustrating a schematic structure of an electrode lead according to an embodiment of the present invention, and FIG. 2 is a perspective view illustrating the schematic structure of the electrode lead according to the embodiment of the present invention.

Referring to FIGS. 1 and 2, an electrode lead 10 includes a metal terminal 1 and a film layer 2 disposed on the metal terminal 1.

Hereinafter, each configuration of the electrode lead 10 will be described in detail with reference to FIGS. 1 and 2.

The metal terminal 1 functions as a passage through which a current flows when electrically connecting a lithium secondary battery and an external device of the secondary battery through the electrode lead, or when electrically connecting secondary batteries to each other.

Specifically, the metal terminal 1 may include at least one selected from the group consisting of aluminum (Al), nickel (Ni), copper (Cu), nickel-plated copper, gold (Au), silver (Ag), platinum (Pt), iron (Fe), chromium (Cr), and manganese (Mn). Specifically, the metal terminal 1 may include at least one selected from the group consisting of aluminum, copper, nickel, and nickel-plated copper in terms of the fact that movement of electrons is facilitated, it has no reactivity with an organic solvent, and it has excellent chemical stability so that oxidation or reduction does not occur even under battery operating conditions for a long time, and may more specifically include aluminum, nickel, or a combination thereof, even more specifically, aluminum.

The metal terminal 1 may be in a form of a rectangular plate, but is not limited thereto, and any form that may play a role in electrically connecting the secondary battery may be used without limitation.

The metal terminal 1 may have a thickness of 0.05 mm to 0.8 mm, preferably 0.1 mm to 0.7 mm, and more preferably 0.15 mm to 0.65 mm.

Specifically, in a case in which the electrode lead 10 is connected to a positive electrode tab 282, the thickness of the metal terminal 1 may be in a range of 0.2 mm to 0.6 mm, preferably 0.3 mm to 0.5 mm, and more preferably 0.35 mm to 0.45 mm, or may be in a range of 0.4 mm to 0.8 mm, preferably 0.5 mm to 0.7 mm, and more preferably 0.55 mm to 0.65 mm. Also, in a case in which the electrode lead 10 is connected to a negative electrode tab 284, the thickness of the metal terminal 1 may be in a range of 0.05 mm to 0.35 mm, preferably 0.1 mm to 0.3 mm, and more preferably 0.15 mm to 0.25 mm, or may be in a range of 0.1 mm to 0.5 mm, preferably 0.2 mm to 0.4 mm, and more preferably 0.25 mm to 0.35 mm. In a case in which the above range is satisfied, since sealing strength of a battery case may be secured, concerns about electrolyte solution leakage and moisture penetration are reduced.

The film layer 2 is disposed on the metal terminal 1 to play a role in improving sealing strength between a lead film and the electrode lead 10.

Also, the film layer 2 may have electrical conductivity. Since the film layer is disposed on the metal terminal and is pressed together when the electrode lead is pressed by a jig, the electrode lead may maintain electrical conductivity when the film layer has electrical conductivity, and thus, the current may flow smoothly through the electrode lead.

Specifically, the film layer 2 may be disposed on one surface or both surfaces of the metal terminal 1.

The film layer 2 may include at least one selected from the group consisting of chromate, zirconium salt, titanium salt, and phosphate, and may preferably include chromate. The chromate, for example, may be represented by Cr₂O₃H₂O. In a case in which the film layer includes chromate, a stable film layer may be formed on the surface of the metal terminal, and, since wettability of a surface of the electrode lead is increased, adhesion performance with respect to the lead film, which is a different material, may be improved. Also, in the case that the film layer includes chromate, the electrical conductivity of the electrode lead may be maintained.

In a case in which the metal terminal 1 and the lead film are in direct contact without the film layer 2, there is a problem in that sealability is reduced due to weak thermal adhesion between the metal terminal and the lead film as a different material. As a result, since delamination between the lead film and the metal terminal may occur, an electrolyte solution leaks between the lead film and the metal terminal, moisture penetrates from the outside, or the metal terminal may be corroded. Accordingly, there is a problem in that life characteristics, output characteristics, and stability of the battery are degraded. Thus, the present invention has solved this problem by forming the film layer on the surface of the metal terminal.

However, when charging is performed while pressing the electrode lead with the jig, the film layer may act as resistance in comparison to the metal terminal, and accordingly, the output characteristics of the battery may be degraded. Also, in a case in which a thickness of the film layer is reduced to improve the resistance problem, since an amount of heat generated at a contact surface between the electrode lead and the jig is increased when a high current flows in the battery, there is a problem in that the stability and life characteristics of the battery are degraded.

Thus, since the film layer 2 according to the present invention includes two or more regular and engraved patterns 3, the film layer may secure adhesion to the lead film while simultaneously reducing resistance and heat which are generated at the contact surface between the electrode lead and the jig when charge and discharge are performed while pressing the electrode lead with the jig.

Specifically, the two or more patterns 3 are engraved on a surface of the film layer 2.

Since the film layer 2 may reduce an area in contact with the jig while relatively reducing current density due to a wide surface area at the same time, when the electrode lead is pressed with the jig, by including a plurality of the engraved patterns 3, the resistance due to the film layer may be reduced. Also, since it is a method of forming the engraved patterns, which is a thin portion, while maintaining the maximum thickness of the film layer, heat generated when a high current flows through the electrode lead may be reduced. Accordingly, the life characteristics, output characteristics, and stability of the lithium secondary battery may be improved.

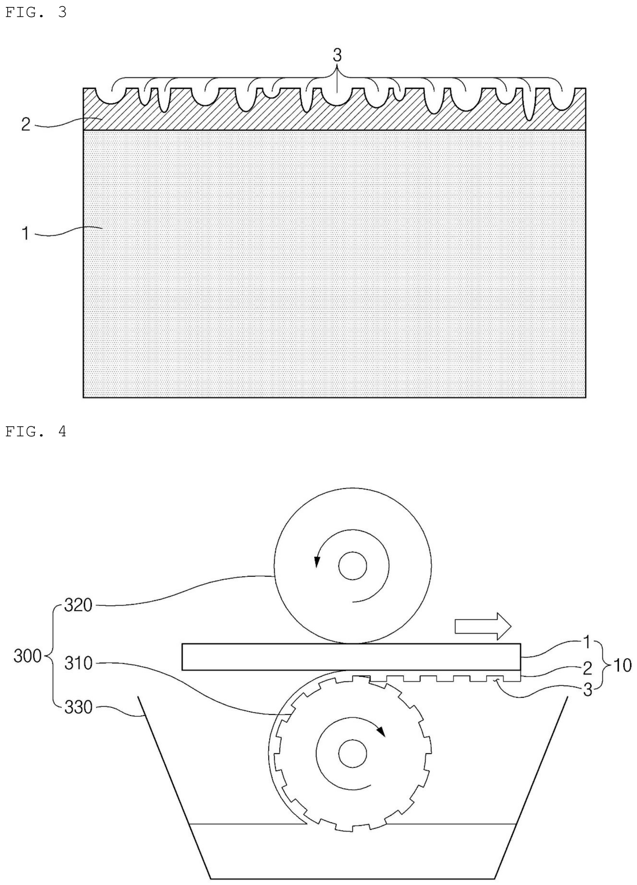

FIG. 3 is a cross-sectional view of an electrode lead including a film layer in which two or more patterns are arranged apart from each other at unequal intervals in a direction parallel to the film layer.

Comparing FIGS. 1 and 2 with FIG. 3, the electrode lead 10 according to the present invention has the patterns 3 engraved on the surface of the film layer 2, and the patterns 3 may be formed uniformly and regularly.

Specifically, in the electrode lead according to the present invention, the two or more patterns 3 are arranged apart from each other at equal intervals in a direction parallel to the film layer 2. In this case, the interval means the shortest length between respective edges of one pattern and another adjacent pattern on an uppermost surface of the film layer. Also, that the interval is equal means that the intervals are equal within an error range of ± 10%. The parallel direction means a direction parallel to the surface of the film layer, and may specifically mean a direction parallel to an interface between the metal terminal and the film layer.

Accordingly, the two or more patterns may be regularly arranged on the surface of the film layer. In this case, when the electrode lead is fastened to the jig and a current is applied, since the current may be prevented from flowing densely in a specific region of the electrode lead, contact resistance and heat generation amount of the entire electrode lead may be reduced.

Each of the patterns 3 includes a side surface and a bottom surface. The bottom surface is a lower surface of the pattern recessed from the uppermost surface of the film layer, wherein it means a surface parallel to the interface between the metal terminal and the film layer, and the side surface means a surface extending from the bottom surface to the uppermost surface of the film layer.

Each of the patterns may have the same depth. In this case, the depth of the pattern means a vertical length from the uppermost surface of the film layer to the bottom surface of the pattern.

That the each of the patterns has the same depth means that the depths are the same within an error range of ± 5%. The contact resistance between the electrode lead and the electrode jig decreases as a standard deviation of a height distribution of the engraved patterns decreases, a size of the pattern decreases, and pattern density increases. In this case, since the contact resistance changes linearly with respect to the pattern density and pattern size, but changes exponentially with respect to the standard deviation of the height distribution of the engraved patterns, the standard deviation of the height distribution of the engraved patterns may have the greatest influence on the contact resistance. That is, in a case in which each of the patterns has the same depth, the standard deviation of the height distribution of the engraved patterns is reduced, the contact resistance is reduced, and an amount of heat generated from the electrode lead is reduced.

Each of the patterns 3 may have the same bottom surface area. In this case, that the each of the patterns has the same bottom surface area means that the bottom surface areas are the same within an error range of ± 5%. In this case, since the patterns engraved on the surface of the film layer may have the same surface area, each of the patterns may exhibit the same current density when charge and discharge are performed while the electrode lead is fastened to the jig. Accordingly, a problem, in which resistance is particularly increased or decreased in a specific region of the electrode lead, does not occur, and the contact resistance and heat generation amount of the entire electrode lead may be reduced.

A shape of the bottom surface of the pattern 3 is not limited, and, for example, may be polygonal, circular, or elliptical.

The bottom surface and the side surface of the pattern 3 may be perpendicular to each other. That is, a cross-sectional area of the pattern may be maintained constant without being decreased or increased along a depth direction of the electrode lead. In this case, the depth direction means a direction perpendicular to the interface between the film layer and the metal terminal. In this case, since the standard deviation of the height distribution of the engraved patterns may be reduced even in a single pattern, the contact resistance may be reduced as described above and the contact resistance and heat generation amount of the electrode lead when the electrode lead is fastened to the jig may be further reduced.

A ratio of the bottom surface areas of the total patterns 3 to a cross-sectional area of the film layer 2 may be in a range of 0.05 to 0.7, preferably 0.06 to 0.6, and more preferably 0.07 to 0.5. In this specification, the cross-sectional area of the film layer means a surface area when no pattern is formed on the film layer. In a case in which the ratio is less than 0.05, since the ratio of the bottom surface areas of the total patterns to the cross-sectional area of the film layer may be small, the contact resistance between the electrode lead and the jig may be increased. Also, in a case in which the ratio is greater than 0.7, the sealing strength between the electrode lead and the lead film may not be improved. Thus, in a case in which the ratio satisfies the above range, the sealing strength between the electrode lead and the lead film may be secured by the film layer while the amount of heat generated from the electrode lead during charge and discharge may be sufficiently reduced, and the contact resistance between the electrode lead and the jig may also be reduced.

A ratio of the bottom surface area of the single pattern 3 to the cross-sectional area of the film layer 2 may be in a range of 0.005 to 0.010, preferably 0.0058 to 0.009, and more preferably 0.006 to 0.008. In a case in which the above range is satisfied, since each pattern may be formed in a small size, the surface area of the entire film layer is relatively large even if the bottom surface areas of the total patterns are the same, and thus, the contact resistance between the electrode lead and the jig may be reduced. Also, since it is possible to prevent formation of a specific single pattern in a large size, the current may flow uniformly throughout the electrode lead during charge and discharge, and accordingly, the contact resistance and amount of heat, which are generated between the electrode lead and the jig, may be reduced evenly.

A ratio of the depth of the pattern 3 to the thickness of the film layer 2 may be in a range of 0.3 to 0.7, preferably 0.4 to 0.65, more preferably 0.45 to 0.6, and even more preferably 0.45 to 0.55. In this case, the thickness of the film layer means a vertical length from the uppermost surface of the film layer to the interface between the metal terminal and the film layer, and the depth of the pattern means the vertical length from the uppermost surface of the film layer to the bottom surface of the pattern. In a case in which the above range is satisfied, adhesion between the entire film layer and the lead film may be sufficiently secured, while the contact resistance by the film layer during charge and discharge may be sufficiently reduced and the amount of heat generated from the electrode lead may also be reduced at the same time.

The thickness of the film layer 2 may be in a range of 10 nm to 60 nm, preferably 15 nm to 40 nm, and more preferably 18 nm to 30 nm. In a case in which the above range is satisfied, since sealing strength of an interface between the electrode lead and the lead film may be sufficiently secured by improving adhesion between the electrode lead and the lead film, a problem of delamination at the interface may be prevented.

Also, a ratio of the thickness of the metal terminal 1 to the thickness of the film layer 2 may be in a range of 10,000:1 to 500:1, preferably 6,000:1 to 500:1, and more preferably 5,000:1 to 500:1. In a case in which the above range is satisfied, since the electrode lead may electrically connect the secondary batteries to each other or may electrically connect the secondary battery to an external device smoothly, the output characteristics may be secured, while adhesive strength with respect to the lead film may be improved by the film layer, and an increase in resistance generated in the electrode lead and resulting heat generation may be reduced.

### Method of Preparing Electrode Lead

Next, a method of preparing an electrode lead according to the present invention includes forming a film layer on a metal terminal by a gravure coating device, wherein the gravure coating device includes a rolling roll and a gravure roll, wherein the gravure roll has surface roughness, and two or more patterns are engraved on a surface of the film layer, wherein the two or more patterns are arranged apart from each other at equal intervals in a direction parallel to the film layer, and each of the patterns includes a side surface and a bottom surface.

FIG. 4 is a schematic process diagram of a gravure coating device 300 for preparing the electrode lead 10 according to the embodiment of the present invention.

Referring to FIG. 4, in the forming of the film layer 2 on the metal terminal 1 by the gravure coating device 300, the film layer 2 may be formed on the metal terminal 1 by supplying a coating liquid to a gravure roll 310 and rotating the gravure roll 310 while in contact with the metal terminal 1. In this case, since a rolling roll 320 is in contact with a surface other than a surface on which the film layer 2 is formed and rotates in an opposite direction to the gravure roll 310, the metal terminal 1 may be moved such that the film layer 2 is formed on the metal terminal 1 by the gravure roll 310.

The gravure coating device 300 includes the rolling roll 320 and the gravure roll 310. Also, the gravure coating device 300 may further include a coating liquid supply tray 330 capable of supplying the coating liquid.

The gravure roll 310 has surface roughness. The two or more patterns 3 may be engraved on the film layer 2 by the roughness formed on a surface of the gravure roll 310. That is, the gravure roll 310 has the same shape and arrangement as the patterns 3, but may include relief patterns, which are opposite the above patterns 3, as the roughness.

The coating liquid may contain at least one selected from the group consisting of chromic acid, zirconium, titanium, and phosphoric acid, and may preferably contain chromic acid.

The metal terminal 1 may include at least one selected from the group consisting of aluminum, nickel, copper, gold, silver, platinum, iron, chromium, and manganese, and more specifically, the metal terminal may include at least one selected from the group consisting of aluminum and nickel in terms of the fact that the movement of electrons is facilitated, it has no reactivity with the organic solvent, and it has excellent chemical stability so that the oxidation or reduction does not occur even under the battery operating conditions for a long time.

The metal terminal 1 may be in a form of a rectangular plate, but is not limited thereto, and any form that may play a role in electrically connecting the secondary battery may be used without limitation.

The metal terminal 1 may have a thickness of 0.05 mm to 0.8 mm, preferably 0.1 mm to 0.7 mm, and more preferably 0.15 mm to 0.65 mm.

Specifically, in a case in which the electrode lead 10 is connected to the positive electrode tab 282, the thickness of the metal terminal 1 may be in a range of 0.2 mm to 0.6 mm, preferably 0.3 mm to 0.5 mm, and more preferably 0.35 mm to 0.45 mm, or may be in a range of 0.4 mm to 0.8 mm, preferably 0.5 mm to 0.7 mm, and more preferably 0.55 mm to 0.65 mm. Also, in a case in which the electrode lead 10 is connected to the negative electrode tab 284, the thickness of the metal terminal 1 may be in a range of 0.05 mm to 0.35 mm, preferably 0.1 mm to 0.3 mm, and more preferably 0.15 mm to 0.25 mm, or may be in a range of 0.1 mm to 0.5 mm, preferably 0.2 mm to 0.4 mm, and more preferably 0.25 mm to 0.35 mm. In a case in which the above range is satisfied, since the sealing strength of the battery case may be secured, the concerns about the electrolyte solution leakage and the moisture penetration are reduced.

The film layer 2 is formed on the metal terminal 1 according to the method of preparing the electrode lead 10 according to the present invention. Specifically, the film layer 2 may be formed on one surface or both surfaces of the metal terminal 1, and may play a role in improving the sealing strength between the lead film and the electrode lead.

The film layer 2 thus formed may include at least one selected from the group consisting of chromate, zirconium salt, titanium salt, and phosphate, and may preferably include chromate. The chromate, for example, may be represented by Cr₂O₃H₂O. In a case in which the film layer includes chromate, a stable film layer may be formed on the surface of the metal terminal, and, since the wettability of the surface of the electrode lead is increased, the adhesion performance with respect to the lead film, as a different material, may be improved.

The two or more patterns 3 are engraved on the surface of the film layer 2, and the patterns 3 may be formed in an engraved form according to a shape of the roughness formed on the surface of the gravure roll 310. Accordingly, the patterns 2 having the same numbers and shape as those of the roughness formed in relief on the surface of the gravure roll 310 may be engraved on the film layer 2.

Since the film layer 2 and patterns formed according to the method of preparing the electrode lead 10 according to the present invention, as the configuration of the electrode lead 10, are the same as those described above, detailed descriptions thereof are omitted.

### Lithium Secondary Battery

According to another embodiment, a lithium secondary battery of the present invention includes an electrode assembly including a positive electrode, a negative electrode, and a separator; a battery case accommodating the electrode assembly; an electrolyte; electrode tabs connected to the positive electrode and the negative electrode and protruding from one side of the assembly; the electrode lead of any one of claims 1 to 9 having one end connected to the electrode tab; and a lead film disposed at an interface between the electrode lead and the battery case.

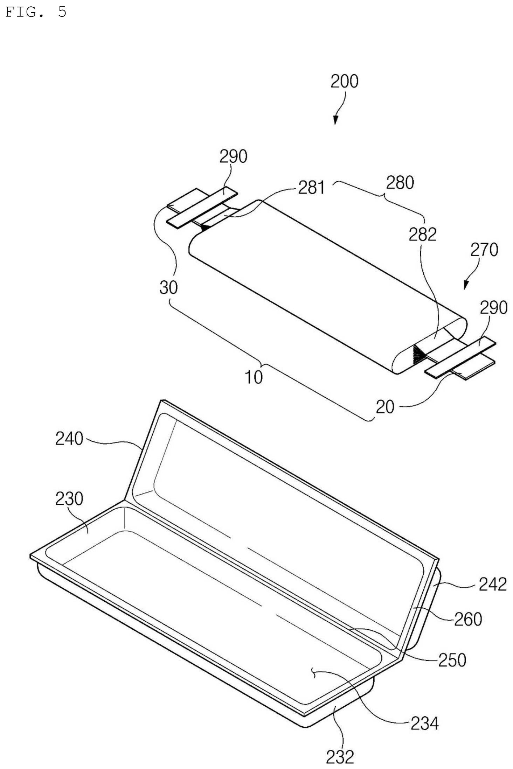

FIG. 5 is an exploded assembly view of the lithium secondary battery according to the present invention.

Hereinafter, each configuration of the lithium secondary battery of the present invention will be described in detail with reference to FIG. 5.

### (1) Electrode Assembly

The electrode assembly includes a positive electrode, a negative electrode, and a separator.

Referring to FIG. 5, in a case in which the lithium secondary battery is a pouch type secondary battery, the electrode assembly 270 may be inserted into a pouch type battery case 210 and may be sealed by the pouch type battery case 210 after the injection of the electrolyte (not shown).

The electrode assembly 270 may be formed by sequentially stacking the positive electrode, the separator, and the negative electrode, and specifically, the electrode assembly 270 may include two types of electrodes, such as the positive electrode and the negative electrode, and the separator disposed between the electrodes to insulate the electrodes from each other.

The positive electrode and the negative electrode may be structures in which active material slurries are applied to electrode current collectors in the form of a metal foil or metal mesh including aluminum and copper, respectively. The slurry may be typically formed by stirring a granular active material, an auxiliary conductor, a binder, and a conductive agent in a state in which a solvent is added. The solvent may be removed in a subsequent process.

A slurry, in which an electrode active material, a binder, and/or a conductive agent are mixed, is applied to a positive electrode collector and a negative electrode collector to prepare a positive electrode and a negative electrode, and the electrode assembly 270 may be prepared in a predetermined shape by stacking the positive electrode and the negative electrode on both sides of the separator. Types of the electrode assembly 270 may include a stacked type, a jelly-roll-type, and a stacked and folded type, but are not limited thereto.

### (2) Battery Case

The battery case may play a role in accommodating the electrode assembly. Specifically, the battery case is sealed after accommodating the electrode assembly and injecting the electrolyte, wherein the battery case is prepared from a material having predetermined flexibility in which an accommodation portion may be formed, and although a shape thereof is not limited, the battery case may preferably be a cylindrical type, coin type, prismatic type, or pouch type. An upper case and a lower case, which constitute the battery case, may be independent members, or may be substantially one member having one side end portion connected. The outer shape of the battery case may be prepared in various ways, and the present invention is not limited thereto.

For example, the battery case may be a pouch type battery case. Referring to FIG. 5, the pouch type battery case 210 may be prepared by forming a pouch film laminate 220. The pouch type battery case 210 may accommodate the electrode assembly 270 inside.

A base material layer 221, a gas barrier layer 222, and a sealant layer 223 may be sequentially laminated in the pouch film laminate 220, but the present invention is not limited thereto.

The base material layer 221 is formed as an outermost layer of the pouch film laminate 220 to protect a secondary battery from friction and collision with the outside. The base material layer is formed of a polymer such that it may electrically insulate the electrode assembly 270 from the outside.

The base material layer 221 may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, Nylon, polyester, polyparaphenylene benzobisoxazole, polyarylate, and Teflon. Among these materials, it is desirable that the base material layer 221 is formed of polyethylene terephthalate (PET), Nylon, or a combination thereof, which have wear resistance and heat resistance.

The gas barrier layer 222 is laminated between the base material layer 221 and the sealant layer 223 to secure mechanical strength of the pouch, block incoming and outgoing of gas or moisture from the outside of the secondary battery, and prevent leakage of the electrolyte from the inside of the pouch type battery case. The gas barrier layer 222 may be formed of metal. For example, the gas barrier layer 222 may be a metal thin film including at least one metal selected from the group consisting of aluminum (Al), copper (Cu), stainless steel (SUS), nickel (Ni), titanium (Ti), and INVAR, but is not limited thereto.

The sealant layer 223 is for completely sealing the inside of the pouch type battery case by being thermally bonded to each other at a sealing portion when the pouch type battery case accommodating the electrode assembly 270 inside is sealed. For this purpose, the sealant layer 223 may be formed of a material having excellent thermal adhesive strength.

The sealant layer 223 may be formed of a material having insulation properties, corrosion resistance, and sealing properties. Specifically, since the sealant layer 223 is in direct contact with the electrode assembly 270 and/or the electrolyte (not shown) inside the pouch type battery case 210, it may be formed of a material having insulation properties and corrosion resistance. Also, since the sealant layer 223 completely seals the inside of the pouch type battery case to block material movement between the inside/the outside, it may be formed of a material having high sealing properties (e.g., excellent thermal adhesive strength). To ensure such insulation properties, corrosion resistance, and sealing properties, the sealant layer 223 may be formed of a polymer material.

Specifically, the sealant layer 223 may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, Nylon, polyester, polyparaphenylene benzobisoxazole, polyarylate, and Teflon, and may preferably be formed of a polyolefin-based resin such as polypropylene (PP) and/or polyethylene (PE). In this case, the polypropylene (PP) may be composed of cast polypropylene (CPP), acid modified polypropylene (PPa), a polypropylene-ethylene copolymer, and/or a polypropylene-butylene-ethylene terpolymer.

The pouch film laminate 220 may be drawn and stretched by a punch or the like to prepare the pouch type battery case 210. As a result, the pouch type battery case 210 may include a cup portion 232 and an accommodation portion 234. The accommodation portion 234 is a place to accommodate the electrode assembly 270, wherein it may mean an accommodation space which is formed in a pocket shape inside the cup portion 232 as the cup portion 232 is formed.

The pouch type battery case 210 may include a first case 230 and a second case 240. The first case 230 includes the accommodation portion 234 capable of accommodating the electrode assembly 270, and the second case 240 may cover the accommodation portion 234 from the top so that the electrode assembly 270 is not separated to the outside of the battery case. The first case 230 and the second case 240 may be prepared by connecting one sides thereof to each other, but the present invention is not limited thereto and the first case 230 and the second case 240 may be prepared in various ways, for example, the first case 230 and the second case 240 are separated from each other and prepared separately.

According to another embodiment of the present invention, in a case in which the cup portion 242 is formed on the pouch film laminate 220, the two symmetrical cup portions 242 may be drawn adjacent to each other on one pouch film laminate 220. In this case, the cup portions 242 may be formed in the first case 230 and the second case 240, respectively. After the electrode assembly 270 is accommodated in the accommodation portion 234 provided in the cup portion 232 of the first case 230, a bridge portion 250 formed between the two cup portions 232 and 242 may be folded so that the two cup portions 242 face each other. In this case, the cup portion 242 of the second case 240 may accommodate the electrode assembly 270 from above. Thus, since the two cup portions 232 and 242 accommodate the one electrode assembly 270, the electrode assembly 270 having a thickness greater than that when the cup portion is one may be accommodated. Also, since one edge of the secondary battery is formed by folding the pouch type battery case 210, the number of edges to be sealed may be reduced when a sealing process is performed later. Accordingly, a process speed of a pouch type secondary battery 200 may be improved, and the number of sealing processes may be reduced.

The pouch type battery case 210 may be sealed in a state in which it accommodates the electrode assembly 270 so that a portion of the electrode lead 10 to be described later, that is, a terminal portion, is exposed. Specifically, when the electrode lead 10 is connected to an electrode tab 280 of the electrode assembly 270 and a lead film 290 is attached to the portion of the electrode lead 10, the electrode assembly 270 is accommodated in the accommodation portion 234 provided in the cup portion 232 of the first case 230, and the second case 240 may cover the accommodation portion 234 from the top. Subsequently, an electrolyte (not shown) is injected into the accommodation portion 234 and a sealing portion 260 formed on edges of the first case 230 and the second case 240 may be sealed.

The sealing portion 260 may act to seal the accommodation portion 234. Specifically, the sealing portion 260 may seal the accommodation portion 234 while being formed along an edge of the accommodation portion 234. Temperature at which the sealing portion 260 is sealed may be in a range of 180°C to 250°C, particularly 200°C to 250°C, and more particularly 210°C to 240°C. In a case in which the sealing temperature satisfies the above numerical range, the pouch type battery case 210 may secure sufficient sealing strength by thermal bonding.

In this case, the sealing portion 260 may be formed by folding toward the accommodation portion 234 to secure energy density of the lithium secondary battery.

### (3) Electrolyte

The electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 4.0 M. If the concentration of the lithium salt is included within the above range, since the electrolyte may have appropriate conductivity and viscosity, excellent performance of the electrolyte may be obtained and lithium ions may effectively move.

In order to improve the life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 5 wt% based on a total weight of the electrolyte.

### (4) Electrode Tab

The electrode tab is connected to each of the positive electrode and the negative electrode and protrudes from one side of the assembly.

Referring to FIG. 5, the electrode tab 280 is connected to each of the positive electrode and the negative electrode of the electrode assembly 270 and protrudes from the electrode assembly to the outside so that it may be a path through which electrons may move between the inside and the outside of the electrode assembly 270. The electrode current collector included in the electrode assembly 270 may be composed of a portion to which the electrode active material is applied and an end portion to which the electrode active material is not applied, that is, a non-coating portion. The electrode tab 280 may be formed by cutting the non-coating portion or may be formed by connecting a separate conductive member to the non-coating portion by ultrasonic welding or the like. As illustrated in FIG. 5, the electrode tabs 280 may protrude in different directions of the electrode assembly 270, respectively, but are not limited thereto and may be formed to protrude in various directions, for example, the electrode tabs 280 protrude side by side from one side of the electrode assembly 270 in the same direction.

### (5) Electrode Lead

The electrode lead 10 may play a role in electrically connecting the secondary battery to the outside. Referring to FIG. 5, the electrode leads 10 may be connected to a plurality of the electrode tabs 280, which are extended from the current collector of each electrode of the electrode assembly 270, by welding, for example, may be connected by spot welding or the like.

The electrode lead 10 is connected to the electrode assembly 270 and may protrude to the outside of the battery case. Specifically, one end of the electrode lead 10 is connected to the electrode assembly 270, especially the electrode tab 280, and the other end of the electrode lead 10 may protrude to the outside of the battery case.

The electrode lead 10 may include a positive electrode lead 20, which has one end connected to the positive electrode tab 282 and extends in a protruding direction of the positive electrode tab 282, and a negative electrode lead 30 which has one end connected to the negative electrode tab 282 and extends in a protruding direction of the negative electrode. The other ends of both of the positive electrode lead 20 and the negative electrode lead 30 may protrude to the outside of the battery case. Accordingly, electricity generated inside the electrode assembly 270 may be supplied to the outside. Also, since the positive electrode tab 282 and the negative electrode tab 284 are formed to respectively protrude in various directions, the positive electrode lead 20 and the negative electrode lead 30 may also respectively extend in various directions. Materials of the positive electrode lead 20 and the negative electrode lead 30 may be different from each other. For example, the positive electrode lead 20 may be formed of an aluminum (Al) material that is the same as the positive electrode collector, and the negative electrode lead 30 may be formed of a copper (Cu) material or nickel (Ni)-coated copper material that is the same as the negative electrode collector. Since a portion of the electrode lead 10 protruding to the outside of the battery case becomes a terminal portion, it may be electrically connected to an external terminal.

Since the other configuration of the electrode lead 10 is the same as described above, a detailed description thereof is omitted.

### (6) Lead Film

The lead film prevents flow of the electricity generated from the electrode assembly to the battery case through the electrode lead, and may maintain sealing of the battery case. For this purpose, the lead film may be formed of an insulator having non-conductivity which does not conduct electricity well. In general, as the lead film, an insulating tape or film, which is easy to be attached to an innermost layer of the electrode lead and/or the battery case and is relatively thin, is widely used, but the present invention is not limited thereto and any member capable of insulating the electrode lead may be used.

Referring to Figure 5, in the case that the lithium secondary battery is a pouch type lithium secondary battery, the lead film 290 may be disposed to surround the interface between the electrode lead 10 and the pouch type battery case 210. For example, the first case 230, the lead film 290, the electrode lead 10, the lead film 290, and the second case 240 may be disposed in a state of being sequentially stacked in a region of the sealing portion 260 of the battery case. Specifically, the electrode lead 10 and the battery case are in contact with each other at one side, wherein, in this case, at least a portion of the electrode lead 10 and the pouch type battery case 210 may be surrounded by the lead film 290, and the electrode lead and the battery case may be adhered to each other.

The lithium secondary battery according to the present invention is suitable for portable devices, such as mobile phones, notebook computers, and digital cameras, and electric cars such as hybrid electric vehicles (HEVs).

Also, a battery pack or a battery module including the lithium secondary battery as a unit cell may be used as a power source of at least one medium and large sized device of a power tool; electric cars including an electric vehicle (EV), a hybrid electric vehicle, and a plug-in hybrid electric vehicle (PHEV); or a power storage system.

The lithium secondary battery according to the present invention may not only be used in a battery cell that is used as a power source of a small device, but may also be used as a unit cell in a medium and large sized battery module including a plurality of battery cells.

Examples of the medium and large sized device may be an electric vehicle, a hybrid electric vehicle, a plug-in hybrid electric vehicle, and a power storage system, but the medium and large sized device is not limited thereto.

Hereinafter, the present invention will be described in more detail, according to specific examples.

### Example 1

After preparing an aluminum (Al) metal terminal having a thickness of 0.4 mm, a width of 45 mm, and a length of 41 mm, a 20 nm thick film layer including chromate (Cr₂O₃H₂O) was formed on a surface of the metal terminal.

Thereafter, engraved patterns in a form of a stripe were formed at equal intervals through a physical etching treatment that applies a constant force to a surface of the film layer, wherein, since the engraved patterns in the form of a stripe were formed such that the interval between the engraved patterns was 4 mm, a horizontal width of the engraved pattern was 0.35 mm, and a depth was 10 nm, an electrode lead simulating the formation of patterns using a gravure coating device was prepared.

### Comparative Example 1

After preparing an aluminum (Al) metal terminal having a thickness of 0.4 mm, a width of 45 mm, and a length of 41 mm, a 20 nm thick film layer including chromate (Cr₂O₃H₂O) was formed on a surface of the metal terminal, and an electrode lead was prepared without any special treatment on a surface of the oxide film layer.

### Comparative Example 2

After preparing an aluminum (Al) metal terminal having a thickness of 0.4 mm, a width of 45 mm, and a length of 41 mm, a 20 nm thick film layer including chromate (Cr₂O₃H₂O) was formed on a surface of the metal terminal.

Thereafter, engraved patterns were formed through a physical etching treatment on a surface of the film layer, but, unlike Example 1, since a force applied when forming one pattern was not maintained constant, the engraved patterns were formed such that a depth was not constant and an interval was irregular, and thus, an electrode lead simulating a case where a gravure coating device was not used was prepared.

### Experimental Example 1: Evaluation of Resistance Measurement When Fastening Jig

After the electrode leads prepared in Example 1 and Comparative Examples 1 and 2 were fastened to a jig, a direct current of 400 A was applied for 10 minutes, and resistance of each electrode lead was then measured by measuring a pressure difference before and after the application of the current. Measurement results are presented in Table 1 below.

**[Table 1]**

| | Surface resistance [mΩ] |
|---|---|
| Example 1 | 0.09±0.008 |
| Comparative Example 1 | 0.24±0.017 |
| Comparative Example 2 | 0.14±0.036 |

Referring to Table 1, it may be confirmed that surface resistance of Example 1, in which the uniform engraved patterns were formed on the surface of the film layer of the electrode lead, was decreased in comparison to that of Comparative Example 1, in which no pattern was formed on the surface of the film layer, and Comparative Example 2 in which the nonuniform engraved patterns were formed.

### Experimental Example 2: Evaluation of Temperature Measurement of the Electrode Lead When Fastening Jig

After the electrode leads prepared in Example 1 and Comparative Examples 1 and 2 were fastened to a jig at room temperature, a direct current of 400 A was applied for 10 minutes, and temperature of each electrode lead was then measured. Measurement results are presented in Table 2 below.

**[Table 2]**

| | Electrode lead temperature [°C] |
|---|---|
| Example 1 | 64.5 |
| Comparative Example 1 | 101.3 |
| Comparative Example 2 | 92.8 |

Referring to Table 2, when the same amount of the direct current was applied, it may be understood that the electrode lead prepared in Example 1 had a lower temperature increase than the electrode leads prepared in Comparative Examples 1 and 2. Thus, it may be understood that, with respect to the electrode lead prepared in Example 1, an amount of heat generated between the electrode lead and the jig during charge and discharge was decreased in comparison to that of the electrode leads prepared in Comparative Examples 1 and 2.

### (Description of the Symbols)

1: Metal Terminal
2: Film Layer
3: Pattern
10: Electrode Lead
20: Positive Electrode Lead
30: Negative Electrode Lead
200: Secondary Battery
210: Battery Case
220: Pouch Film Laminate
221: Base Material Layer
222: Gas Barrier Layer
223: Sealant Layer
230: First Case
232: Cup Portion
234: Accommodation Portion
240: Second Case
242: Cup Portion
250: Bridge Portion
260: Sealing Portion
270: Electrode Assembly
280: Electrode Tab
282: Positive Electrode Tab
284: Negative Electrode Tab
290: Lead Film
300: Gravure Coating Device
310: Gravure Roll
320 Rolling Roll
330: Coating Liquid Supply Tray

## Claims

1. An electrode lead electrically connected to an electrode assembly, the electrode lead comprising:
a metal terminal; and
a film layer which is disposed on the metal terminal and has two or more patterns engraved on a surface of the film layer,
wherein the two or more patterns are arranged apart from each other at equal intervals in a direction parallel to the film layer, and
each of the patterns comprises a side surface and a bottom surface.

2. The electrode lead of claim 1, wherein a shape of the bottom surface of the pattern is polygonal, circular, or elliptical.

3. The electrode lead of claim 1, wherein each of the patterns has an identical depth.

4. The electrode lead of claim 1, wherein each of the patterns has an identical bottom surface area.

5. The electrode lead of claim 1, wherein the bottom surface and the side surface of the pattern are perpendicular to each other.

6. The electrode lead of claim 1, wherein a ratio of bottom surface areas of the total patterns to a cross-sectional area of the film layer is in a range of 0.05 to 0.7.

7. The electrode lead of claim 1, wherein a ratio of a bottom surface area of the single pattern to a cross-sectional area of the film layer is in a range of 0.005 to 0.010.

8. The electrode lead of claim 1, wherein a ratio of a depth of the pattern to a thickness of the film layer is in a range of 0.3 to 0.7.

9. The electrode lead of claim 1, wherein the film layer comprises at least one selected from the group consisting of chromate, zirconium salt, titanium salt, and phosphate.

10. The electrode lead of claim 1, wherein the metal terminal comprises at least one selected from the group consisting of aluminum, copper, nickel, and nickel-plated copper.

11. The electrode lead of claim 1, wherein a ratio of a thickness of the metal terminal to a thickness of the film layer is in a range of 10,000:1 to 500:1.

12. A lithium secondary battery comprising:
an electrode assembly including a positive electrode, a negative electrode, and a separator;
a battery case accommodating the electrode assembly;
an electrolyte;
an electrode tab connected to each of the positive electrode and the negative electrode and protruding from one side of the assembly;
the electrode lead of any one of claims 1 to 11 having one end connected to the electrode tab; and
a lead film disposed at an interface between the electrode lead and the battery case.

13. A method of preparing an electrode lead, the method comprising:
forming a film layer on a metal terminal by a gravure coating device,
wherein the gravure coating device comprises a rolling roll and a gravure roll,
wherein the gravure roll has surface roughness, and
two or more patterns are engraved on a surface of the film layer,
wherein the two or more patterns are arranged apart from each other at equal intervale in a direction parallel to the film layer, and
each of the patterns comprises a side surface and a bottom surface.

14. The method of claim 13, wherein the film layer comprises at least one selected from the group consisting of chromate, zirconium salt, titanium salt, and phosphate.

15. The method of claim 13, wherein each of the patterns has an identical depth, and
each of the patterns has an identical bottom surface area.
